# EUROPÄISCHE PATENTANMELDUNG

(11) **EP 2 090 846 A2**
(43) Veröffentlichungstag der Anmeldung: **19.08.2009**
(21) Anmeldenummer: 09001355.8
(22) Anmeldetag: 31.01.2009
(51) Int. Cl.: F24J 2/10, F24J 2/24, F24J 2/46, F24J 2/05

(54) **Solarkollektor**

(30) Priorität: 15.02.2008 DE 102008009402
(71) Anmelder: AkoTec Produktionsgesellschaft mbH, 16278 Angermünde (DE)
(72) Erfinder: Weiser Reinhold, 16278 Angermünde (DE)
(74) Vertreter: Hauck Patent- und Rechtsanwälte

(57) **Zusammenfassung**

Solarkollektor (1) mit einem Gehäuse (2) mit einer Bodenwand (12) und mindestens einer Stirnwand (4), einer Vielzahl von Kollektorröhren (3), die im Gehäuse (2) angeordnet und von diesen getragen werden, mit den Kollektorröhren (3) in Verbindung stehenden Verteiler/Sammelrohren (6), die das die Kollektorröhren (3) durchströmende Fluid den Kollektorröhren zuführen und von diesen abführen, und einem oder mehreren den Kollektorröhren zugeordneten Reflektoren, wobei der Reflektor bzw. die Reflektoren vom tragenden Gehäuse (2) gebildet sind.

## Beschreibung

Die vorliegende Erfindung betrifft einen Solarkollektor mit einem Gehäuse mit einer Bodenwand und mindestens einer Stirnwand, einer Vielzahl von Kollektorröhren, die im Gehäuse angeordnet und von diesem getragen werden, mit den Kollektorröhren in Verbindung stehenden Verteiler/Sammelrohren, die dass die Kollektorröhren durchströmende Fluid den Kollektoren zuführen und von diesen abführen, und einem oder mehreren, den Kollektorröhren zugeordneten Reflektoren.

Derartige Solarkollektoren sind bekannt. Sie weisen einen oder mehrere Reflektoren zum Reflektieren der Sonnenstrahlung und zum Kollimieren der reflektierten Strahlung in einer Brennebene und einen Absorber zum Absorbieren der in der Brennebene kollimierten Strahlung, der von einem Wärmeträgerfluid durchströmt wird, um die Energie der absorbierten Strahlung in Absorptionswärme umzuwandeln, auf. Dieser Absorber wird hierbei von den Kollektorröhren gebildet, bei denen es sich beispielsweise um Vakuumröhren handeln kann, die ein äußeres Hüllrohr und ein inneres, vom Wärmeträgerfluid durchströmtes Absorberrohr aufweisen.

Ein derartiger Solarkollektor ist beispielsweise aus der DE 103 38 483 A1 bekannt. Bei dem bekannten Solarkollektor sind mehrere Kollektorröhren in einem wannenförmigen Gehäuse angeordnet und werden von diesem getragen. Ferner trägt das Gehäuse einen unterhalb der Kollektorröhren angeordneten Reflektor, der sich aus einer Vielzahl von konkaven Reflektorabschnitten zusammensetzt, in welchen jeweils eine Kollektorröhre angeordnet ist. Bei diesem bekannten Solarkollektor bildet somit der Reflektor ein zusätzliches Bauteil, das am Kollektorgehäuse montiert ist.

Der vorliegenden Erfindung liegt die Aufgabe zugrunde, einen Solarkollektor der eingangs wiedergegebenen Art zu schaffen, der sich durch einen besonders einfachen Aufbau auszeichnet.

Diese Aufgabe wird erfindungsgemäß bei einem Solarkollektor der angegebenen Art dadurch gelöst, dass der Reflektor bzw. die Reflektoren vom tragenden Gehäuse gebildet sind.

Der erfindungsgemäß ausgebildete Solarkollektor weist somit kein als Reflektor ausgebildetes Bauteil zusätzlich zum Gehäuse auf, sondern hierbei bildet das Gehäuse selbst den Reflektor bzw. die Reflektoren. Das Gehäuse erfüllt somit eine Doppelfunktion: zum einen bildet es das tragende Bauteil für die Röhrenkonstruktion und zum anderen bildet es den Reflektor für die Kollektorröhren. Hierdurch wird die Konstruktion des Solarkollektors wesentlich vereinfacht, da die Anzahl der Bauteile reduziert wird.

Bei der erfindungsgemäßen Lösung kann das Gehäuse aus einem sonnenlichtreflektierenden Material bestehen oder ein solches Material umfassen. Es versteht sich, dass das Material hierbei eine bestimmte Stärke und die Konstruktion eine bestimmte Festigkeit aufweisen muss, um die Funktion als tragendes Gehäuse zu erfüllen. Bei einer preisgünstigeren Erfindungsgemäßen Lösung besteht das Gehäuse zumindest teilweise aus einem Trägermaterial, das auf der Innenseite mit einem reflektierenden Material beschichtet ist. Diese Lösung hat den Vorteil, dass als Trägermaterial ein relativ preiswertes Material eingesetzt werden kann, beispielsweise ein geeigneter Kunststoff, während das reflektierende Material nur in Form einer relativ dünnen Beschichtung zum Einsatz gelangt. So kann beispielsweise das Gehäuse als Trägermaterial einen UV-beständigen Kunststoff aufweisen, auf den ein reflektierendes Material, wie beispielsweise Aluminium, aufkaschiert ist.

Das Gehäuse des Solarkollektors weist eine Bodenwand und mindestens eine sich von dieser aus insbesondere senkrecht dazu erstreckende Stirnwand auf, wobei in der Regel zwei Stirnwände vorhanden sind. Vorzugsweise besitzt das Gehäuse bei dem erfindungsgemäß ausgebildeten Solarkollektor keine Seitenwände, sondern lediglich entsprechende Abkantungen nach oben oder unten, um die Festigkeit bzw. Steifigkeit der Gehäusekonstruktion zu verbessern.

Bei der erfindungsgemäßen Lösung kann das gesamte Gehäuse oder nur ein Teil davon als Reflektor ausgebildet sein. Beispielsweise kann nur die Bodenwand des Gehäuses den Reflektor bzw. die Reflektoren bilden, aber auch Bodenwand und Stirnwände zusammen, d. h. das gesamte Gehäuse, können als Reflektor bzw. Reflektoren ausgebildet sein. Die zuletzt genannte Lösung wird bevorzugt, da sich hierbei das gesamte Gehäuse aus einem einheitlichen Material herstellen lässt und lediglich noch in die gewünschte Gehäuseform gebracht werden muss. So kann beispielsweise eine aluminiumbeschichtete Kunststoffplatte als Ausgangsmaterial für das Gehäuse dienen und mit entsprechenden Stirnwänden sowie seitlichen Abkantungen versehen werden.

Das Gehäuse ist daher vorzugsweise einstückig ausgebildet, insbesondere wannenförmig. Innerhalb der als Reflektor ausgebildeten Wanne sind die Kollektorröhren angeordnet und münden in insbesondere senkrecht dazu verlaufende Verteiler/Sammelrohre. Diese Verteiler/Sammelrohre können in Weiterbildung der Erfindung vom Gehäuse abgedeckt sein, d. h. die Stirnwände des Gehäuses können rechtwinklig hierzu mit parallel zur Bodenwand verlaufenden Gehäuseabschnitten versehen sein, die Abdeckungen für die Verteiler/Sammelrohre bilden. An diese Abschnitte können sich bei einer weiteren Ausführungsform der Erfindung weitere Gehäuseabschnitte rechtwinklig hierzu erstrecken, die parallel zu den Stirnwänden verlaufen. Bei der zuletzt beschriebenen Ausführungsform werden somit die Verteiler/Sammelrohre durch Gehäuseabschnitte umschlossen, so dass auf diese Weise ein zusätzlicher Schutz gegen Beschädigungen bzw. eine zusätzliche Wärmeisolierung erreicht wird.

Was die Lagerung der Kollektorröhren am Gehäuse anbetrifft, so sieht die Erfindung eine Lösung vor, bei der die Stirnwände des Gehäuses Durchtrittsöffnungen aufweisen, durch die sich die Kollektorröhren bzw. Verbindungsrohre/Verbindungsstücke zwischen den Verteiler/Sammelrohren und den Kollektorröhren erstrecken, welche von den Stirnwänden getragen werden und hieran befestigt sind. Auf diese Weise werden daher die Kollektorröhren selbst oder entsprechende Verbindungsrohre/Verbindungsstücke von den Stirnwänden getragen, ohne dass zusätzliche Stütz- bzw. Lagerelemente für die Kollektorröhren vorgesehen sein müssen. Die Verbindung zwischen den Kollektorröhren und den Verteiler/Sammelrohren erfolgt dabei vorzugsweise über Steckverbindungen, so dass eine rasche Montage und Demontage des Röhrensystems, auch für Austauschzwecke, möglich ist. Die Kollektorröhren sind dabei vorzugsweise verdrehbar gelagert, so dass sich eine optimale Lage in Bezug auf die Sonneneinstrahlung erreichen lässt.

Die Verteiler/Sammelrohre sind zweckmäßigerweise über Halterungen an den Gehäusestirnwänden befestigt. Damit wird eine Fixierung zwischen Gehäuse und Verteiler/Sammelrohren erreicht.

Die Solarkollektoren können so ausgebildet sein, dass sie an einem Ende der Kollektorröhren ein Verteilerrohr aufweisen, über das das Fluid zugeführt wird, und am anderen Ende der Kollektorröhren ein Sammelrohr besitzen, über das das Fluid abgeführt wird. Bei einer anderen bevorzugten Ausführungsform sind das Verteilerrohr und die Kollektorröhren als Koaxialrohre ausgebildet, wobei Innenrohr und Ringspalt vom Fluid in verschiedenen Richtungen durchströmt werden. Mit anderen Worten, hierbei erfolgt der Zufluss des Fluides vorzugsweise über den Ringspalt des Verteilerrohres in die jeweiligen Ringspalte der Kollektorröhren und wird am anderen Ende der Röhren in das Innenrohr umgeleitet, in dem das Fluid zum Innenrohr des Verteilerrohres zurückfließt und von diesem abgeführt wird. Hierbei weist daher der Kollektor kein gesondertes, am anderen Ende der Kollektorröhren angeordnetes Sammelrohr auf. Solche Rohrsysteme sind bekannt und müssen hier im Einzelnen nicht erneut beschrieben werden. Gerade bei derartigen Koaxialrohrsystemen ist die erfindungsgemäße Lösung besonders wirksam.

Die Erfindung wird nachfolgend anhand von Ausführungsbeispielen in Verbindung mit der Zeichnung im Einzelnen erläutert. Es zeigen:
- Figur 1: eine räumliche schematische Teildarstellung eines Solarkollektors;
- Figur 2: eine räumliche Darstellung des Solarkollektors der Figur 1, wobei nur die Kollektorröhren und das Gehäuse dargestellt sind;
- Figur 3: eine räumliche Darstellung einer weiteren Ausführungsform eines Solarkollektors in schematischer Darstellung;

- Figur 4: eine räumliche Darstellung entsprechend Figur 2 von zwei zusammengesetzten Solarkollektoren; und
- Figur 5: eine Unteransicht eines Teils des Solarkollektors der Figuren 1 und 2.

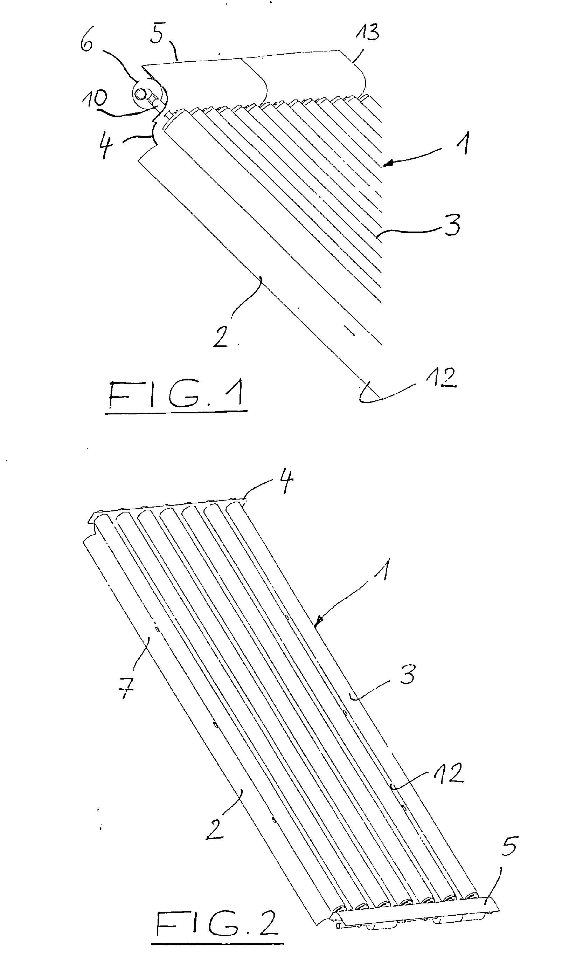

In der räumlichen Darstellung der Figur 1 erkennt man einen Solarkollektor 1, der eine Vielzahl parallel zueinander angeordneten Kollektorröhren 3 aufweist. Bei diesen Kollektorröhren kann es sich beispielsweise um Vakuumröhren handeln, die ein äußeres Hüllrohr aus Glas und ein inneres Absorberrohr aufweisen, das von einem Wärmeträgerfluid durchflossen wird. Die genaue Ausgestaltung der Kollektorröhren spielt für die hier beschriebene Erfindung keine Rolle.

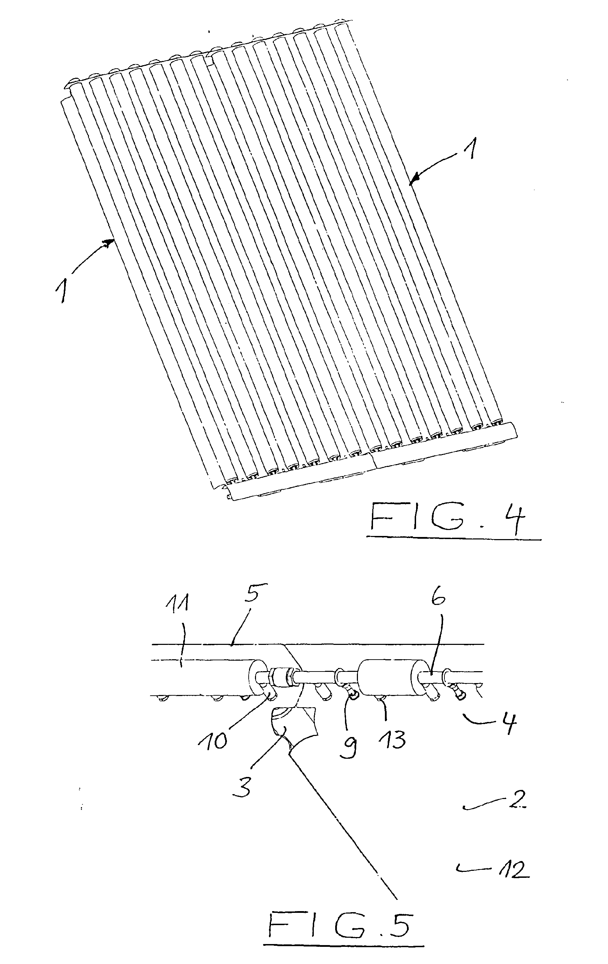

Die Kollektorröhren 3 werden von einem schematisch in Figur 1 dargestellten Kollektorgehäuse 2 getragen, das eine Bodenwand 12 und zwei Stirnwände 4 (in Figur 4 ist nur eine Stirnwand gezeigt) aufweist. Die Stirnwand 4 erstreckt sich hierbei etwa senkrecht zur Bodenwand und endet in einem um etwa 90° abgewinkelten Gehäuseabschnitt 5, der parallel zur Bodenwand 12 verläuft. Die Stirnwand 4 ist mit einer Vielzahl von Durchtrittsöffnungen 13 versehen, durch die sich Verbindungsrohre 10 zwischen den Kollektorröhren 3 und einem Verteilerrohr 6 erstrecken, das etwa senkrecht zu den Verbindungsrohren 10 verläuft. Das Verteilerrohr 6, das mit einer geeigneten Isolierung dargestellt ist, führt das Wärmeträgermedium heran und verteilt dieses auf die einzelnen Kollektorröhren 3, die vom Wärmeträgermedium durchflossen werden. Bei dieser Ausführungsform weist der Solarkollektor 1 kein vom Verteilerrohr getrenntes Sammelrohr auf, sondern besitzt ein als Koaxialrohr ausgebildetes Verteilerrohr 6, über dessen Ringspalt das Wärmeträgermedium zugeführt und über dessen Innenrohr das Wärmeträgermedium abgeführt wird. Auch die Kollektorröhren 3 sind hierbei als Koaxialröhren ausgebildet. Durch den Ringspalt der Kollektorröhre strömt das Wärmeträgermedium vom Verteilerrohr zum anderen Ende der Röhren und gelangt dort mit Richtungsumkehr in das jeweilige Innenrohr der Röhren, von wo es in das Innenrohr des Verteilerrohres zurückgeführt wird. Das Innenrohr des Verteilerrohres 6 ist dabei über eine Steckverbindung mit dem Innenrohr der Kollektorröhren 3 verbunden.

Die Verbindungsrohre sind an der Stirnwand 4 in geeigneter Weise in den Durchtrittsöffnungen 13 befestigt. Einzelheiten hierzu sind in Figur 5 dargestellt. Ferner ist auch das Verteilerrohr 6 an der Stirnwand 4 befestigt (siehe hierzu ebenfalls Figur 5).

Das wannenartig ausgebildete Gehäuse 2 bildet somit das tragende Bauteil für die Röhrenkonstruktion. Es besteht aus einer unteren Trägerschicht aus einem geeigneten UV-beständigen Kunststoff, auf die eine lichtreflektierende Aluminiumschicht aufkaschiert ist. Diese aufkaschierte reflektierende Schicht bildet einen Reflektor für die Kollektorröhren 3, d. h. auftreffendes Sonnenlicht wird auf die Röhren zurückreflektiert, um deren Effizienz zu steigern.

Durch Versuche wurde festgestellt, dass mit dem hier dargestellten Gehäuse mit aufkaschiertem Aluminium eine um etwa 20%-45%höhere Leistung des Kollektors im Vergleich zu einem Kollektor ohne Reflektor erzielt wurde.

Die Kollektorröhren 3 bzw. Verbindungsrohre 10 sind bei der hier dargestellten Ausführungsform mit Steckverbindern versehen, so dass sie in einfacher Weise mit den Verteiler/Sammelrohren 6 verbunden bzw. wieder von diesen getrennt werden können.

Figur 2 zeigt eine räumliche Ansicht des Solarkollektors 1 der Figur 1. Das tragende Gehäuse 2 ist hierbei ebenfalls dargestellt. Die Bodenwand 12 des Gehäuses weist seitliche Abkantungen 7 auf, um die Festigkeit bzw. Steifigkeit des Gehäuses zu erhöhen.

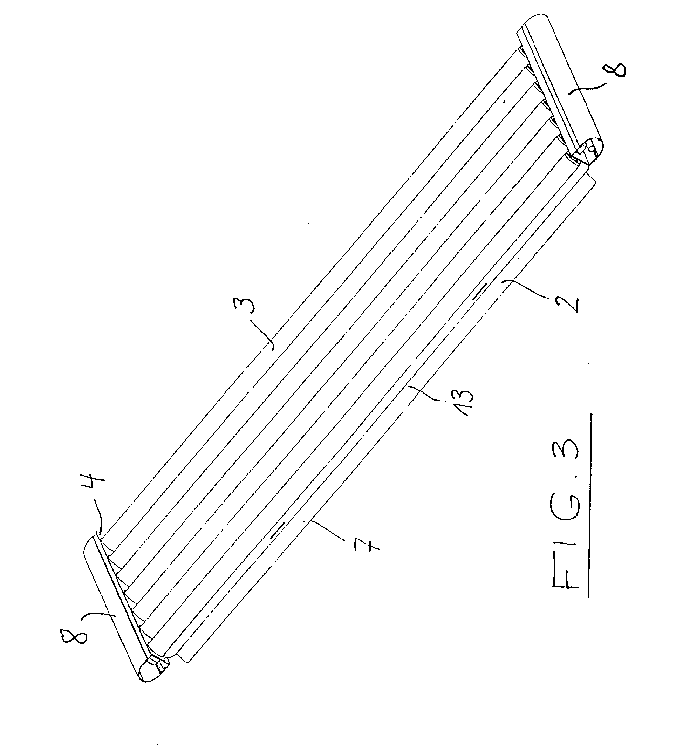

Figur 3 zeigt eine räumliche Darstellung einer weiteren Ausführungsform eines Solarkollektors. Der Kollektor besitzt bei dieser Ausführungsform sechs parallel zueinander angeordnete Kollektorröhren 3, die von einem Gehäuse 2 getragen werden. Das Gehäuse weist eine ebene Bodenwand 13 sowie zwei Stirnwände 4 und einen Gehäuseabschnitt 8 auf, der die entsprechenden Verteiler/Sammelrohre umschließt. Auch bei dieser Ausführungsform erstrecken sich die Kollektorröhren 3 bzw. entsprechende Verbindungsrohre durch Durchtrittöffnungen in den Stirnwänden 4 und sind über geeignete Steckverbindungen mit den Verteiler/Sammelrohren verbunden. Das Gehäuse 2 besteht wiederum aus einem UVbeständigem Kunststoffmaterial, das mit einer Aluminiumfolie kaschiert ist, welche die Reflektorfunktion für die Kollektorröhren übernimmt. Bei dieser Ausführungsform sind zumindest die Bodenwand 13 und die Stirnwände 4 reflektierend ausgebildet.

Figur 4 zeigt zwei zusammengesetzte Kollektoren 1 der Ausführungsform der Figur 2. Man erkennt, dass mehrere Kollektoren zusammengesetzt werden können, ohne dass hierbei sichtbare Übergänge entstehen. Die aneinandergereihten Bodenwände 13 der Gehäuse 2 bilden einen gemeinsamen Reflektor für die Kollektorröhren.

Figur 5 zeigt den Anschluss der Kollektorröhren 3 an das Verteilerrohr 6. Entsprechende Verbindungsrohre 10 bzw. Verbindungsstücke der Kollektorröhren 3 erstrecken sich durch Durchtrittsöffnungen 13, die in der Stirnwand 4 des Kollektorgehäuses 2 ausgebildet sind. Diese Verbindungsrohre 10 bzw. Verbindungsstücke münden in ein rechtwinklig hierzu verlaufendes Verteilerrohr 6, das mit einer geeigneten Isolierung 11 (nur teilweise gezeigt) versehen ist. Das Verteilerrohr wird durch einen Gehäuseabschnitt 5 abgedeckt.

Das Verteilerrohr 6 ist über geeignete Befestigungselemente 9 am Gehäuse fixiert. Bei diesen Befestigungselementen kann es sich beispielsweise um Tragelemente für das Verteilerrohr 6 handeln, die mit der Stirnwand 4 des Gehäuses verschraubt sind. Die Verbindungsrohre 10 bzw. Verbindungsstücke sind in den Durchtrittöffnungen 13 ebenfalls an den Stirnwänden 4 fixiert, so dass sich ein festes Gesamtgebilde ergibt.

Da bei den hier beschriebenen Ausführungsformen gesonderte Reflektoren entfallen und das tragende Gehäuse die Reflektorfunktion übernimmt, wird eine einfache und kompakte Baueinheit geschaffen, die sich letztendlich nur aus den Kollektorröhren, der Gehäusewanne aus alukaschiertem Kunststoff und dem Verteilerrohr/Sammelrohr mit Verbindungsstücken bzw. Steckverbindern zusammensetzt.

Die Abdeckung für das Verteilerrohr/Sammelrohr kann einstückig mit der Bodenwand und Stirnwand ausgebildet sein oder als getrennte Abdeckung, die in geeigneter Weise mit dem übrigen Gehäuse verbunden ist.

## Patentansprüche

1. Solarkollektor mit einem Gehäuse mit einer Bodenwand und mindestens einer Stirnwand, einer Vielzahl von Kollektorröhren, die im Gehäuse angeordnet sind und von diesem getragen werden, mit den Kollektorröhren in Verbindung stehenden Verteiler/Sammelrohren, die das die Kollektorröhren durchströmende Fluid den Kollektoren zuführen und von diesen abführen, und einem oder mehreren, den Kollektorröhren zugeordneten Reflektoren, **dadurch gekennzeichnet, dass** der Reflektor bzw. die Reflektoren vom tragenden Gehäuse (2) gebildet sind.

2. Solarkollektor nach Anspruch 1, **dadurch gekennzeichnet, dass** das Gehäuse (2) aus einem sonnenlichtreflektierenden Material besteht oder ein solches umfasst.

3. Solarkollektor nach Anspruch 1 oder 2, **dadurch gekennzeichnet, dass** das Gehäuse (2) zumindest teilweise aus einem Trägermaterial besteht, das auf der Innenseite mit einem reflektierenden Material beschichtet ist.

4. Solarkollektor nach einem der vorangehenden Ansprüche, **dadurch gekennzeichnet, dass** nur die Bodenwand (12) des Gehäuses (2) den Reflektor bzw. die Reflektoren bildet.

5. Solarkollektor nach einem der vorangehenden Ansprüche, **dadurch gekennzeichnet, dass** Bodenwand (12) und Stirnwände (4) den Reflektor bzw. die Reflektoren bilden.

6. Solarkollektor nach einem der vorangehenden Ansprüche, **dadurch gekennzeichnet, dass** das Gehäuse (2) wannenförmig ausgebildet ist.

7. Solarkollektor nach einem der vorangehenden Ansprüche, **dadurch gekennzeichnet, dass** das Gehäuse (2) einstückig ausgebildet ist.

8. Solarkollektor nach einem der vorangehenden Ansprüche, **dadurch gekennzeichnet, dass** die Stirnwände (4) des Gehäuses (2) Durchtrittsöffnungen (13) aufweisen, durch die sich die Kollektorröhren (3) bzw. Verbindungsrohre (10) oder Verbindungsstücke zwischen den Verteiler/Sammelrohren (6) und den Kollektorröhren (3) erstrecken, welche von den Stirnwänden (4) getragen werden und hieran befestigt sind.

9. Solarkollektor nach einem der vorangehenden Ansprüche, **dadurch gekennzeichnet, dass** das Gehäuse (2) die Verteiler/Sammelrohre (6) abdeckt.

10. Solarkollektor nach einem der vorangehenden Ansprüche, **dadurch gekennzeichnet, dass** das Gehäuse (2) die Verteiler/Sammelrohre (6) umschließt.

11. Solarkollektor nach einem der vorangehenden Ansprüche, **dadurch gekennzeichnet, dass** das Gehäuse (2) als Trägermaterial einen UV-beständigen Kunststoff aufweist, auf den ein reflektierendes Material, insbesondere Aluminium, aufkaschiert ist.

12. Solarkollektor nach einem der vorangehenden Ansprüche, **dadurch gekennzeichnet, dass** die Kollektorröhren (3) und die Verteiler/Sammelrohre (6) über Steckverbindungen verbunden sind.

13. Solarkollektor nach einem der vorangehenden Ansprüche, **dadurch gekennzeichnet, dass** die Kollektorröhren (3) verdrehbar sind.

14. Solarkollektor nach einem der vorangehenden Ansprüche, **dadurch gekennzeichnet, dass** die Verteiler/Sammelrohre (6) über Halterungen (9) an den Gehäusestirnwänden (4) befestigt sind.

15. Solarkollektor nach einem der vorangehenden Ansprüche, **dadurch gekennzeichnet, dass** das Verteilerrohr (6) und die Kollektorröhren (3) als Koaxialrohre ausgebildet sind, wobei Innenrohr und Ringspalt vom Fluid in verschiedenen Richtungen durchströmt werden.
